# EUROPÄISCHE PATENTSCHRIFT

(11) **EP 2 714 480 B1**
(45) Veröffentlichungstag und Bekanntmachung des Hinweises auf die Patenterteilung: **28.01.2015**
(21) Anmeldenummer: 12721509.3
(22) Anmeldetag: 14.05.2012
(51) Int. Cl.: B60T 8/36

(54) **ELEKTROMAGNETVENTIL, INSBESONDERE FÜR SCHLUPFGEREGELTE KRAFTFAHRZEUGBREMSANLAGEN**
SOLENOID VALVE, IN PARTICULAR FOR SLIP-CONTROLLED MOTOR VEHICLE BRAKING SYSTEMS
ÉLECTROVANNE DESTINÉE EN PARTICULIER À DES SYSTÈMES DE FREINAGE DE VÉHICULES AUTOMOBILES À ANTIPATINAGE

(30) Priorität: 26.05.2011 DE 102011076556
(43) Veröffentlichungstag der Anmeldung: 09.04.2014
(73) Patentinhaber: Continental Teves AG & Co. oHG, 60488 Frankfurt (DE)
(72) Erfinder: VOSS, Christoph, 60435 Frankfurt am Main (DE)
(86) Internationale Anmeldenummer: PCT/EP2012/058857
(87) Internationale Veröffentlichungsnummer: WO 2012/159908

(56) Entgegenhaltungen:
- DE-A1-102005 014 100
- DE-A1-102007 026 358
- DE-A1-102008 020 855

## Beschreibung

Die Erfindung betrifft ein Elektromagnetventil, insbesondere für schlupfgeregelte Kraftfahrzeugbremsanlagen, nach dem Oberbegriff des Patentanspruchs 1.

Aus der DE 10 2005 014 100 A1 ist bereits ein Elektromagnetventil der angegebenen Art bekannt geworden, dessen stößelförmiges Ventilschließglied relativ beweglich in einem topfförmigen Koppelelement aufgenommen ist, das an einem Fortsatz eines Magnetankers angebracht ist. Die Führung des Magnetankers in einem hülsenförmigen Ventilgehäuse erfolgt über die gesamte Baulänge des Magnetankerkopfes, während der durch den Fortsatz, das Koppelelement und das stößelförmige Ventilschließglied gebildete untere Abschnitt am Magnetanker abhängig von der Führungsgenauigkeit des Magnetankerkopfes innerhalb des Ventilgehäuses auf ein in einer Führungshülse aufgenommenes weiteres Ventilschließglied gerichtet ist, der einen für das stößelförmige Ventilschließglied vorgesehenen Ventilsitz trägt.

Daher ist es die Aufgabe der vorliegenden Erfindung, ein Elektromagnetventil der angegebenen Art mit möglichst einfachen, funktionsgerechten Mitteln kostengünstig und kleinbauend auszuführen und derart zu verbessern, dass das im Koppelelement aufgenommene Ventilschließglied möglichst präzise in Richtung auf seinen im weiteren Ventilschließglied angeordneten Ventilsitz ausgerichtet ist.

Diese Aufgabe wird erfindungsgemäß für das Elektromagnetventil der angegebenen Art durch die kennzeichnenden Merkmale des Patentanspruchs 1 gelöst.

Weitere Merkmale und Vorteile der Erfindung gehen im nachfolgenden aus der Beschreibung von mehreren Ausführungsbeispielen hervor.

Es zeigen:
- Figur 1: eine Gesamtansicht eines Elektromagnetventils im Längsschnitt gemäß dem Stand der Technik, mit einem in einem Koppelelement geführten ersten Ventilschließglied,
- Figur 2: eine erste erfindungsgemäße Abwandlung des Elektromagnetventils nach Figur 1 im Bereich des Koppelelements und der Führungshülse,
- Figur 3: eine Perspektivdarstellung des in Figur 2 abgebildeten Koppelelements mit Blickrichtung von unten,
- Figur 4: eine Abwandlung des in Figur 2 abgebildeten topfförmigen Koppelelements im Bereich des Topfrandes und des Topfbodens.

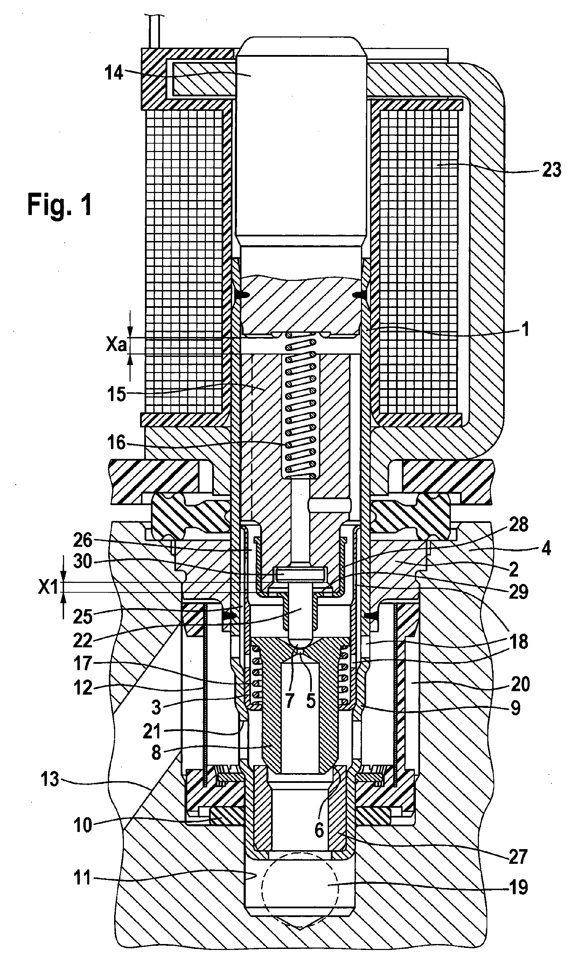

Die Fig. 1 zeigt in einer erheblichen Vergrößerung ein Elektromagnetventil im Längsschnitt mit einem einteiligen, im Tiefziehverfahren dünnwandig ausgeführten Ventilgehäuse 1, das einen separaten, am Außenumfang des Ventilgehäuses aufgesetzten und mittels Laserschweißung befestigten Haltekragen 2 aufnimmt, der durch spanlose Umformung beispielsweise als Kaltschlagteil hergestellt ist. Der im wesentlichen scheibenförmige Haltekragen 2 ist am Außenumfang als Verstemmstempel ausgebildet, so dass dieser mit seiner am Umfang umlaufenden Hinterschneidung mit dem Ventilgehäuse 1 in einer gestuften Aufnahmebohrung eines blockförmigen Ventilträgers 4 eingepresst ist, dessen weiches Material durch einen Einpressvorgang zu Befestigungs- und Dichtzwecken in die Hinterschneidung verdrängt ist. Oberhalb des Haltekragens 2 ist der offene Endabschnitt des hülsenförmigen Ventilgehäuses 1 mit einem Stopfen verschlossen, der gleichzeitig die Funktion eines Magnetkerns 14 übernimmt. Auch der Stopfen besteht aus einem kostengünstigen und hinreichend präzise gefertigten Kaltschlagteil, das mit dem Ventilgehäuse 1 am Außenumfang laserverschweißt ist. Unterhalb des Stopfens befindet sich ein Magnetanker 15, der aus einem Rund- oder Mehrkantprofil durch Kaltschlagen bzw. Fließpressen gleichfalls sehr kostengünstig hergestellt ist. Der Magnetanker 15 verschließt unter der Wirkung einer Rückstellfeder 16 in der Ventilgrundstellung mit dem im Fortsatz des Magnetankers 15 angeordneten ersten Ventilschließglied 7 einen ersten, in einem zweiten Ventilschließglied 8 angeordneten Ventildurchlass 5. Hierzu ist das erste Ventilschließglied 7 zweckmäßigerweise an einem Stößelabschnitt angebracht, der an der unteren Stirnfläche des Magnetankers 15 hubbeweglich angeordnet ist, während das zweite Ventilschließglied 8 im wesentlichen als hülsenförmiger Ventilkolben ausgeführt ist, der unter der Wirkung einer das zweite Ventilschließglied 8 von seinem Ventilsitzkörper 27 anhebenden Feder 17 beaufschlagt ist. Die Feder 17 stützt sich hierzu an einem Rand des zweiten Ventilschließgliedes 8 ab.

Infolge der Wirkung der Rückstellfeder 16 auf den ersten Ventilschließkörper 7 verschließt in der abbildungsgemäßen Ventilgrundstellung das zweite Ventilschließglied 8 einem im unteren Ende des Ventilgehäuses 1 vorgesehenen zweiten Ventildurchlass 6, dessen abhängig vom hydraulischen Differenzdruck freischaltbarer Durchlassquerschnitt erheblich größer ist als der elektromagnetisch freischaltbare Öffnungsquerschnitt am ersten Ventildurchlass 5.

Zur Aufnahme und Abdichtung des Ventilgehäuses 1 in der Bohrungsstufe 11 ist das Ventilgehäuse 1 im Bereich der Bohrungsstufe 11 im Durchmesser verkleinert und mit einem Dichtring 10 versehen, so dass sich zwischen dem Ventilgehäuse 1 und der Bohrungsstufe 11 kein Leckagestrom zwischen dem seitlich in das Ventilgehäuse 1 einmündenden Druckmitteleinlass 13 und den unterhalb des Ventilgehäuses 1 angeordneten Druckmittelauslass 19 einstellen kann. Der im wesentlichen als Schrägkanal im Ventilträger 4 dargestellte Druckmitteleinlass 13 setzt sich über den im Hohlraum 20 des Ventilträgers 4 befindlichen Ringfilter 12 zur gestanzten Querbohrung 21 im Ventilgehäuse 1 fort, so dass einlassseitiges Druckmittel unmittelbar am zweiten Ventilschließglied 8 ansteht, dessen in der Horizontalebene angeordneten Querbohrungen 21 einen widerstandsarmen, umlenkungsfreien und damit einen direkten Strömungsweg zum zweiten Ventilschließglied 8 gewährleisten. Gleichfalls besteht ein weiterer Strömungsweg über die Querbohrungen 18 zum ersten Ventilkörper 7.

Die Feder 17 befindet sich außerhalb des den Druckmitteleinlass 13 mit dem Druckmittelauslass 19 verbindbaren Strömungswegs, wozu entfernt vom Strömungsweg die Führungshülse 3 im Ventilgehäuse 1 eingesetzt ist, an der sich das vom zweiten Ventilschließglied 8 abgewandte Ende der Feder 17 abstützt. Folglich ist die Feder 17 oberhalb der Querbohrungen 21 an der Führungshülse 3 angeordnet. Die Führungshülse 3 stützt sich an einer Gehäusestufe 9 im Ventilgehäuse 1 ab. Diese Gehäusestufe 9 ist oberhalb der das Ventilgehäuse 1 durchdringenden Querbohrung 21 angeordnet. Die Führungshülse 3 ist im Topfboden derart geöffnet, dass in deren Öffnung das zweite Ventilschließglied 8 in Richtung auf den Ventilsitzkörper 27 geführt und zentriert werden kann. Das untere Ende der Feder 17 stützt sich am Topfboden der Führungshülse 3 ab. Der vom Topfboden abgewandte Topfrand ist nach der Innenwand des Ventilgehäuses 1 abgekröpft. Hierdurch ist zwischen dem Außenmantel des Hülsentopfs und der Innenwand des hülsenförmigen Ventilgehäuses 1 ein Ringraum 25 gelegen, der über Druckausgleichsöffnungen 18, die im Ventilgehäuse 1 und am Umfang des Hülsentopfs angeordnet sind, zwischen dem Druckmitteleinlass 13 und einem Magnetankerraum 26 eine permanente Druckmittelverbindung herstellt. Die Führungshülse 3 und die Ventilhülse 1 bestehen jeweils aus einem tiefgezogenen Dünnblech, in welches die Druckausgleichsöffnungen 18 eingestanzt oder eingeprägt sind. Hierdurch ergeben sich besonders kleine, kostengünstig und präzise herzustellende Ventilteile.

Das einteilige Ventilgehäuse 1 ist als abgestufte, dünnwandig gezogene Hülse ausgeführt, dessen vom zweiten Ventildurchlass 6 abgewandtes offenes Hülsenende vom Magnetkern 14 verschlossen ist. Der zweite Ventildurchlass 6 ist zur mechanischen Entlastung des Ventilgehäuses 1 in einem scheiben- oder hülsenförmigen Ventilsitzkörper 27 vorgesehen, der an der Innenwand des Ventilgehäuses 1 mittels Presssitz gehalten ist. Der Ventilsitzkörper 27 besteht aus einem verschleißfesten Metall. Er ist in seiner Bauhöhe derart gewählt, dass das zweite Ventilschließglied 8 auf der Höhe der diametralen Querbohrungen 21 des Ventilgehäuses 1 endet.

Der Magnetanker 15 ist relativ zum ersten Ventilschließglied 7 beweglich ausgeführt, so dass vorteilhaft eine elektromagnetische Betätigung des Magnetankers 15 gewährleistet ist, die nicht von der hydraulischen Schließkraft beeinträchtigt wird, die das erste Ventilschließglied 7 entgegengesetzt zum Öffnungshub des Magnetankers 15 beaufschlagt. Das erste Ventilschließglied 7 ist daher in der einfachsten Ausführung über ein definiertes Axialspiel mit dem Magnetanker 15 gekoppelt.

Um nach einem anfänglichen Teilhub des Magnetankers das erste Ventilschließglied 7 anheben zu können, befindet sich am Magnetanker 15 ein Koppelelement 28, das das erste Ventilschließglied 7 in gewissen Grenzen relativ beweglich am Magnetanker 15 hält. Das Koppelelement 28 ist bevorzugt als eine am Magnetanker 15 befestigte, im Wesentlichen topfförmig gestaltete Hülse ausgeführt, die eine ringscheibenförmige Anschlagschulter 29 aufweist, durch deren Öffnung sich das erste Ventilschließglied 7 mit seinem Stößelabschnitt 22 in Richtung auf das zweite kolbenförmige Ventilschließglied 8 erstreckt. Zwischen der Anschlagschulter 29 und einem Bund 30 am Stößelabschnitt 22 ist ein vom Bund 30 überbrückbarer Abstand vorgesehen, um eine Relativbewegung zwischen dem Magnetanker 15 und dem Ventilschließglied 7 zu gewährleisten. Hierdurch hält zu Beginn des Magnetankerhubs das erste Ventilschließglied 7 die Öffnung 5 im zweiten Ventilschließglied 8 zunächst verschlossen.

Der Bund 30 weist somit in der elektromagnetisch nicht erregten Ventilstellung einen Axialabstand X1 vom Hülsenende des Koppelelement 28 auf, wobei der Axialabstand X1 dem anfänglichen, gegenüber dem ersten Ventilschließglied 7 relativ bewegten Magnetankerhub entspricht, bei dem das erste Ventilschließglied 7 während der elektromagnetischen Erregung des Magnetankers 15 unter der Wirkung unterschiedlicher Hydraulikdrücke am zweiten Ventilschließglied 8 verharrt.

Das Koppelelement 28 besteht aus einem vorzugsweise im Tiefziehverfahren hergestellten Dünnblech, das kraft- und/ oder formschlüssig mit dem Magnetanker 15 verbunden ist.

Nach Figur 1 ist das Koppelelement 28 als Hülsentopf ausgeführt. Abhängig von der Presstiefe des Koppelelements 28 am unteren Fortsatz des Magnetankers 15 verbleibt zwischen dem Boden des Hülsentopfs und dem Bund 30 der einstellbare Axialabstand X1, wodurch die gewünschte Relativbewegung zwischen dem Magnetanker 15 und dem ersten Ventilschließglied 7 festgelegt ist.

### Funktionsweise des Elektromagnetventils:

In der abgebildeten, elektromagnetisch nicht erregten Ventilstellung nehmen infolge der Schließkraft der Rückstellfeder 16, deren Federkraft größer dimensioniert ist als die Kraft der entgegengesetzt wirkenden Feder 17, beide Ventilschließglieder 7, 8 ihre Ventilschließstellungen ein.

Unter der Voraussetzung, dass gleiche hydraulische Drücke im Druckmitteleinlass 13 und Druckmittelauslass 19 vorherrschen, legt der Magnetanker 15 bei elektromagnetischer Erregung bis zum Anliegen am Magnetkern 14 einen Hub zurück, der dem maximalen Hub des zweiten Ventilschließglieds 8 entspricht. Da die Wirkung der Rückstellfeder 16 auf die Ventilschließglieder 7, 8 in der elektromagnetischen Erregung infolge der vom Bund 30 entfernten Anordnung der Rückstellfeder 16 aufgehoben ist, bewegen sich beide aneinander anliegende Ventilschließglieder 7, 8 infolge der Wirkung der Feder 17 synchron zur Magnetankerbewegung, sodass der maximale Querschnitt am Ventildurchlass 6 sofort nach elektromagnetischer Erregung freigegeben wird.

Ist aber der Druck im Druckmitteleinlass 13 größer als der Hydraulikdruck am Druckmittelauslass 19, vermindert sich die Wirkung der Feder 17 auf das zweite Ventilschließglied 8 um den aus der hydraulischen Beaufschlagung des zweiten Ventilschließglieds 8 resultierenden Kraftbetrag. Dementsprechend vermindert bzw. eliminiert sich auch die Rückwirkung der Feder 17 auf den ersten Ventilschließglied 7, der zusätzlich zur Kraftwirkung der Rückstellfeder 16 unter der Wirkung der hydraulischen Druckdifferenz im Schließsinn beaufschlagt wird.

Erfolgt unter den dargelegten Gegebenheiten nunmehr eine elektromagnetisch initiierte Hubbewegung des Magnetankers 15, so legt der Magnetanker 15 unter Kompression der Rückstellfeder 16 zunächst bis zum Anliegen der Schulter 29 am Bund 30 den Axialabstand X1 zurück, was einem Teilhub des Magnetankers 15 entspricht. Während diesem Teilhub verharrt somit das erste, hydraulisch nicht druckausgeglichene Ventilschließglied 7 unter der Wirkung des hydraulischen Drucks in der abgebildeten Schließstellung am zweiten Ventilschließglied 8. In dem Moment, wenn infolge der Relativbewegung des Magnetankers 15 gegenüber dem ersten Ventilschließglied 7 die Schulter 29 des Koppelelements 28 den Bund 30 berührt, ist der Abstand des Magnetankers 15 vom Magnetkern 14 bereits um den Teilhub X1 auf ein Minimum reduziert, sodass vorteilhaft nur eine geringe elektromagnetische Erregung erforderlich ist, um zum Abheben des ersten Ventilschließglieds 7 vom Ventildurchlass 5 den verbliebenen minimalen Luftspalt zwischen Magnetkern und Magnetanker zu überbrücken.

Somit wird das erste Ventilschließglied 7 erst kurz bevor der Magnetanker 15 den Magnetkern 14 erreicht, über das Koppelelement 28 angehoben, wodurch sich das erste Ventilschließglied 7 vom zweiten Ventilschließglied 8 entfernt und den blendenförmigen Ventildurchlass 5 freigibt. Damit,ist auf verhältnismäßig einfache Weise die Voraussetzung geschaffen, dass auch das zweite Ventilschließglied 8 durch die Feder 17 unterstützt den drosselfreien großen Querschnitt des Ventildurchlasses 6 zu öffnen vermag, sobald ein hydraulischer Druckausgleich über den Ventildurchlass 5 gewährleistet ist.

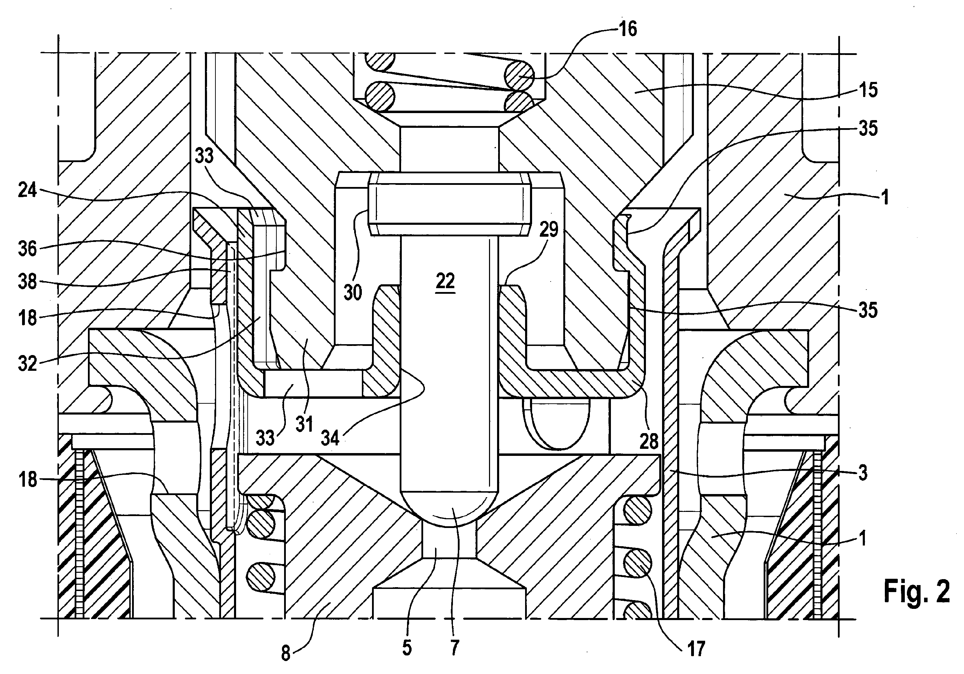

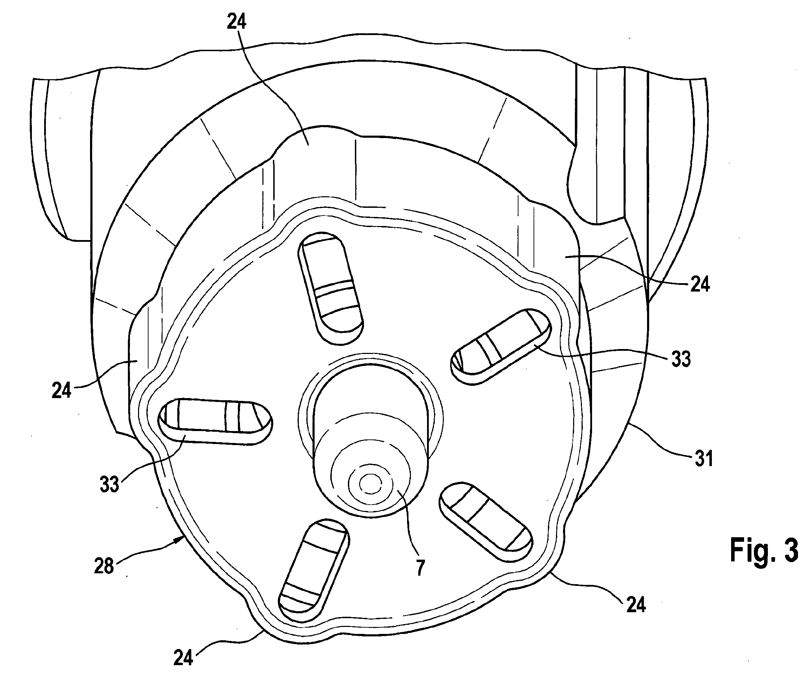

Um nunmehr eine möglichst präzise, widerstandsarme Führung des Magnetankers 15 als auch Zentrierung des ersten Ventilschließgliedes 7 gegenüber seinem im zweiten Ventilschließglied 8 integrierten Ventilsitz (Ventildurchlass 5) zu ermöglichen, ist abweichend von Figur 1 in Figur 2 zu erkennen, dass das an einem schlanken Magnetankerfortsatz 31 befestigte Koppelelement 28 erfindungsgemäß die Innenwand der Führungshülse 3 abschnittsweise gleitbeweglich kontaktiert, wozu anhand der Perspektivansicht in Figur 3 das Koppelelements 28 gleichmäßig über seine Mantelfläche verteilt mehrere radiale Vorsprünge 24 aufweist, welche die Innenwand der Führungshülse 3 gleitbeweglich kontaktieren.

Die radialen Vorsprüngen 24 erstrecken sich als achsparallel zum Magnetanker 15 ausgerichtete Stege über die gesamte Wandhöhe des topfförmigen Koppelelements 28, wobei zwischen den Vorsprüngen 24 und des vom Koppelelements 28 verdeckten Wandabschnitt des Magnetankerfortsatzes 31 ein Zwischenraum 32 zur Hindurchführung von Druckmittel vorgesehen ist. Dieser Zwischenraum 32 ist mit mehreren im Boden des topfförmig ausgeführten Koppelelements 28 als auch am oberen Topfrand des Koppelelements 28 vorgesehenen Druckausgleichsöffnungen 33 hydraulisch verbunden.

Wie aus Figur 3 hervor geht, sind die im Boden des topfförmigen Koppelelements 28 vorgesehenen Druckausgleichsöffnungen 33 sternförmig um eine für die Aufnahme des ersten Ventilschließglieds 7 vorgesehene Zentralöffnung 34 in der Stirnfläche des Bodens (Anschlagschulter 29) verteilt. Die zwischen den Vorsprüngen 24 angeordnete Mantelfläche 35 des Koppelelements 28 kontaktiert auf besonders einfache Weise mittels einer Presspassung die Mantelfläche des Magnetankerfortsatz 31.

Aus der Figur 3 geht deutlich die Kontur der zwischen den Vorsprüngen 24 angeordnete Mantelfläche 35 des Koppelelements 28 hervor, die gemäß der Schnittdarstellung nach Figur 2 mittels einer partiellen Radialverformung am oberen Topfrand des Koppelelements 28 in einer am Magnetankerfortsatz 31 vorgesehene Nut 36 form- und/oder reibschlüssig eingreift.

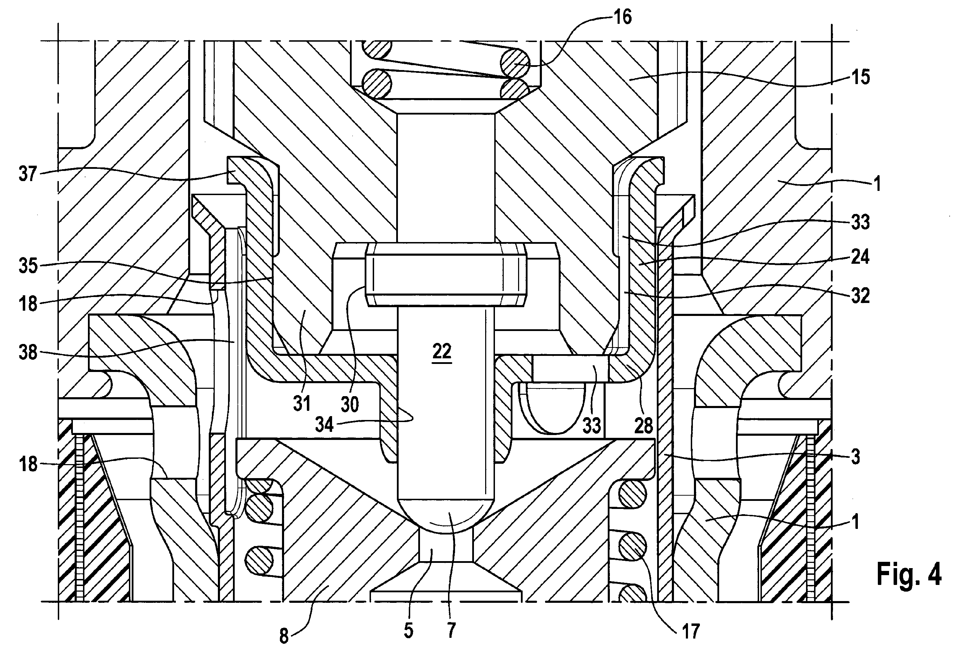

Die in den Figuren 2 bis 4 abgebildete Erfindung zeichnet sich ferner dadurch aus, dass vorteilhaft ausschließlich die zwischen den Vorsprüngen 24 angeordnete Mantelfläche 35 des Koppelelementes 28 während des Aufpressens auf den Magnetankerfortsatz 31 unter radialer Vorspannung kurzzeitig aufgeweitet wird, wozu in der baulichen Ausführung nach Figur 4 der obere Topfrand des Koppelelements 28 eine der radialen Aufweitung entgegenwirkende Versteifung aufweist, die durch einen radial nach außen abgekröpften Kragen 37 hergestellt ist. Hierdurch wird erreicht, dass nach dem Aufpressen des Koppelelements 28 auf den Magnetankerfortsatz 31 wieder eine radiale Rückfederung des aufgeweiteten Wandabschnitts der Mantelfläche 35 in Richtung des Magnetankerfortsatzes 31 erfolgt.

Wie aus den Figuren 2 und 4 deutlich zu erkennen ist, sind über den Umfang der Innenwand der Führungshülse 3 mehrere eingepresste Vertiefungen 38 vorgesehen, die zur Aufnahme und translatorischen Führung der Vorsprünge 24 in Form von Längsnuten an die Außenkontur der Vorsprünge 24 angepasst sind, sodass insgesamt eine besonders präzise Führung des Koppelelements 28 innerhalb der Führungshülse 3 erfolgt.

Soweit bezüglich der Ausführungsformen nach Fig. 2 bis 4 nicht auf alle zeichnerisch ersichtlichen Details eingegangen wurde, sind diese Details dem Beschreibungsteil zu Figur 1 zu entnehmen.

Zusammenfassend betrifft die Erfindung somit ein kompakt bauendes Elektromagnetventil, dessen Magnetanker 15 relativ zum ersten Ventilschließglied 7 axial beweglich ausgeführt ist, wozu das erste Ventilschließglied 7 teleskopartig in dem am Magnetanker 15 angebrachten Koppelelement 28 aufgenommen ist, das entlang der Innenwand der im Ventilgehäuse 1 eingesetzten Führungshülse 3 geführt ist, um den Magnetanker 15 präzise mit dem ersten Ventilschließglied 7 in Richtung des im zweiten Ventilschließgliedes 8 vorgesehenen Ventilsitzes (Ventildurchlass 5) auszurichten.

Das vorgestellte Elektromagnetventil findet bevorzugt eine Verwendung in schlupfgeregelten Kraftfahrzeugbremsanlagen, die nach dem Rückförderprinzip ausgelegt sind. Insbesondere bei der Verwendung einer entsprechend saugstarken Stufenkolbenpumpe in einer mit Fahrdynamikregelung versehenen Kraftfahrzeugbremsanlage wird durch den Einsatz des vorgestellten Elektromagnetventils eine unerwünschte Saugdrosselung der Stufenkolbenpumpe sicher vermieden.

### Bezugszeichenliste

- 1: Ventilgehäuse
- 2: Haltekragen
- 3: Führungshülse
- 4: Ventilträger
- 5: Ventildurchlass
- 6: Ventildurchlass
- 7: Ventilschließglied
- 8: Ventilschließglied
- 9: Gehäusestufe
- 10: Dichtring
- 11: Bohrungsstufe
- 12: Ringfilter
- 13: Druckmitteleinlass
- 14: Magnetkern
- 15: Magnetanker
- 16: Rückstellfeder
- 17: Feder
- 18: Druckausgleichsöffnung
- 19: Druckmittelauslass
- 20: Hohlraum
- 21: Querbohrung
- 22: Stößelabschnitt
- 23: Ventilspule
- 24: Vorsprung
- 25: Ringraum
- 26: Magnetankerraum
- 27: Ventilsitzkörper
- 28: Koppelelement
- 29: Anschlagschulter
- 30: Bund
- 31: Magnetankerfortsatz
- 32: Zwischenraum
- 33: Druckausgleichsöffnung
- 34: Zentralöffnung
- 35: Mantelfläche
- 36: Nut
- 37: Kragen
- 38: Vertiefung

## Patentansprüche

1. Elektromagnetventil, insbesondere für schlupfgeregelte Kraftfahrzeug-Bremsanlagen, mit einem in einem Ventilgehäuse (1) angeordneten ersten und einem zweiten Ventilschließglied (7; 8), die in koaxialer Anordnung im Ventilgehäuse einen ersten als auch einen zweiten Ventildurchlass (6; 5) hubabhängig zu öffnen oder zu verschließen vermögen, mit einem Magnetanker (15), der mit dem ersten Ventilschließglied (7) eine eigenständig handhabbare Baugruppe bildet, die unter der Wirkung einer Rückstellfeder (16) am zweiten Ventilschließglied (8) anlegbar ist, der innerhalb einer im Ventilgehäuse (1) fixierten Führungshülse (3) axial beweglich aufgenommen ist, mit einem Magnetkern (14) im Ventilgehäuse (1), an dem sich ein von der Baugruppe abgewandtes Federende der Rückstellfeder (16) abstützt, mit einem in das Ventilgehäuse einmündenden Druckmitteleinlass (13) und einem Druckmittelauslass (19), wobei das erste Ventilschließglied (7) abhängig von der elektromagnetischen Erregung einer Ventilspule (23) den im zweiten Ventilschließglied (8) gelegenen ersten Ventildurchlass (5) zu öffnen oder zu verschließen vermag, dessen Durchlassquerschnitt kleiner ist als der unter dem Einfluss einer Feder (17) zu öffnende zweite Ventildurchlass (6), der in einem Ventilsitzkörper (27) vorgesehen ist, mit einem im Wesentlichen topfförmig gestalteten, an einem Magnetankerfortsatz (31) angebrachten Koppelelement (28), in dem das erste Ventilschließglied (7) relativ beweglich zum Magnetanker (15) aufgenommen ist, **dadurch gekennzeichnet, dass** das Koppelelement (28) die Innenwand der Führungshülse (3) abschnittsweise kontaktiert.

2. Elektromagnetventil nach Anspruch 1, **dadurch gekennzeichnet, dass** das Koppelelement (28) gleichmäßig über seine Mantelfläche verteilt mehrere radiale Vorsprünge (24) aufweist, welche die Innenwand der Führungshülse (3) gleitbeweglich kontaktieren.

3. Elektromagnetventil nach Anspruch 2, **dadurch gekennzeichnet, dass** sich die radialen Vorsprüngen (24) als achsparallel zum Magnetanker (15) ausgerichtete Stege über die gesamte Wandhöhe des topfförmigen Koppelelements (28) erstrecken, und dass zwischen den Vorsprüngen (24) und des vom Koppelelement (28) verdeckten Wandabschnitt des Magnetankerfortsatzes (31) ein Zwischenraum (32) zur Hindurchführung von Druckmittel vorgesehen ist.

4. Elektromagnetventil nach Anspruch 3, **dadurch gekennzeichnet, dass** der Zwischenraum (32) mit mehreren im Boden des topfförmig ausgeführten Koppelelements (28) als auch am oberen Topfrand des Koppelelements (28) vorgesehenen Druckausgleichsöffnungen (33) hydraulisch verbunden ist.

5. Elektromagnetventil nach Anspruch 4, **dadurch gekennzeichnet, dass** die im Boden des topfförmigen Koppelelements (28) vorgesehenen Druckausgleichsöffnungen (33) sternförmig um eine für die Aufnahme des ersten Ventilschließglieds (7) vorgesehene Zentralöffnung (34) in der Stirnfläche des Bodens verteilt sind.

6. Elektromagnetventil nach Anspruch 2, **dadurch gekennzeichnet, dass** die zwischen den Vorsprüngen (24) angeordnete Mantelfläche des Koppelelements (28) mittels einer Presspassung am Magnetankerfortsatz (31) gehalten ist.

7. Elektromagnetventil nach Anspruch 6, **dadurch gekennzeichnet, dass** die zwischen den Vorsprüngen (24) angeordnete Mantelfläche des Koppelelements (28) mittels einer partiellen Radialverformung der Mantelfläche (35) am oberen Topfrand des Koppelelements (28) in einer am Magnetankerfortsatz (31) vorgesehene Nut (36) formschlüssig gesichert ist.

8. Elektromagnetventil nach Anspruch 6, **dadurch gekennzeichnet, dass** ausschließlich die zwischen den Vorsprüngen (24) sich erstreckende Mantelfläche (35) des Koppelelementes (28) während des Aufpressens auf den Magnetankerfortsatz (31) unter radialer Vorspannung aufgeweitet ist.

9. Elektromagnetventil nach Anspruch 6, **dadurch gekennzeichnet, dass** der obere Topfrand des Koppelelements (28) zur Versteifung einen radial nach außen gerichteten Kragen (37) aufweist, wodurch nach dem Aufpressen des Koppelelements (28) auf den Magnetankerfortsatz (31) eine radiale Rückfederung des Wandabschnitts in Richtung des Magnetankerfortsatzes (31) gewährleistet ist.

10. Elektromagnetventil nach Anspruch 2, **dadurch gekennzeichnet, dass** über den Umfang der Innenwand der Führungshülse (3) mehrere Vertiefungen (38) vorgesehen sind, die zur Aufnahme und translatorischen Führung der Vorsprünge (24) in Form von Längsnuten an die Außenkontur der Vorsprünge (24) angepasst sind.

## Claims

1. Solenoid valve, in particular for slip-controlled motor vehicle braking systems, comprising: a first and a second valve closing body (7; 8) arranged in a valve housing (1), which valve closing bodies (7; 8), disposed coaxially in the valve housing, are able to open or close a first and a second valve orifice (6; 5) in a stroke-dependent manner; a magnet armature (15) which forms with the first valve closing body (7) an assembly which can be manipulated independently and which can be placed on the second valve closing body (8) under the effect of a return spring (16), which valve closing body (8) is accommodated in an axially movable manner within a guide sleeve (3) fixed in the valve housing (1); a magnet core (14) in the valve housing (1) against which an end of the return spring (16) oriented away from the assembly bears; a pressure medium inlet (13) which opens into the valve housing and a pressure medium outlet (19), the first valve closing body (7) being able to open or close the first valve orifice (5) located in the second valve closing body (8) as a function of the electromagnetic excitation of a valve coil (23), the clear cross section of which first valve orifice (5) is smaller than that of the second valve orifice (6), which is provided in a valve seat body (27) and which is openable under the influence of a spring (17); and a substantially pot-shaped coupling element (28) which is mounted on a magnet armature extension (31) and in which the first valve closing body (7) is received movably relative to the magnet armature (15), **characterized in that** the coupling element (28) contacts zonally the inner wall of the guide sleeve (3).

2. Solenoid valve according to Claim 1, **characterized in that** the coupling element (28) has a plurality of radial projections (24) which are distributed uniformly around its lateral surface and which contact the inner wall of the guide sleeve (3) in a slidable manner.

3. Solenoid valve according to Claim 2, **characterized in that** the radial projections (24) extend over the full wall height of the pot-shaped coupling element (28) as lands aligned axially parallel to the magnet armature (15), and **in that** a gap (32) for the passage of pressure medium is provided between the projections (24) and the wall section of the magnet armature extension (31) covered by the coupling element (28).

4. Solenoid valve according to Claim 3, **characterized in that** the gap (32) is connected hydraulically to a plurality of pressure compensation openings (33) provided in the base of the pot-shaped coupling element (28) and at the upper pot edge of the coupling element (28).

5. Solenoid valve according to Claim 4, **characterized in that** the pressure compensation openings (33) provided in the base of the pot-shaped coupling element (28) are distributed in a stellar formation around a central opening (34) in the end face of the base which is provided to receive the first valve closing body (7).

6. Solenoid valve according to Claim 2, **characterized in that** the lateral surface of the coupling element (28) arranged between the projections (24) is retained on the magnet armature extension (31) by means of a press fit.

7. Solenoid valve according to Claim 6, **characterized in that** the lateral surface of the coupling element (28) arranged between the projections (24) is secured by positive engagement in a groove (36) provided in the magnet armature extension (31) by means of a partial radial deformation of the lateral surface (35) at the upper pot edge of the coupling element (28).

8. Solenoid valve according to Claim 6, **characterized in that** only the lateral surface (35) of the coupling element (28) extending between the projections (24) is expanded under radial preload as the coupling element (28) is pressed onto the magnet armature extension (31).

9. Solenoid valve according to Claim 6, **characterized in that** the upper pot edge of the coupling element (28) has for stiffening a radially outwardly oriented collar (37) which ensures that the wall section springs back radially in the direction of the magnet armature extension (31) after the coupling element (28) has been pressed onto the magnet armature extension (31).

10. Solenoid valve according to Claim 2, **characterized in that** a plurality of depressions (38) are provided around the circumference of the inner wall of the guide sleeve (3) and are adapted, in the form of longitudinal grooves, to the outer contour of the projections (24) in order to receive and translationally guide the projections (24).

## Revendications

1. Soupape électromagnétique, en particulier pour installations de freinage de véhicules automobiles à patinage régulé, présentant
un premier et un deuxième organe (7; 8) de fermeture de soupape disposés dans un boîtier (1) de soupape et qui permettent d'ouvrir ou de fermer en fonction de la course un premier et un deuxième passage de soupape (6; 5) disposés coaxialement dans le boîtier de soupape,
un induit magnétique (15) qui forme avec le premier organe (7) de fermeture de soupape un module manipulable de manière autonome qui peut être placé sur le deuxième organe (8) de fermeture de soupape sous l'effet d'un ressort de rappel (16), l'organe de fermeture de soupape étant logé à déplacement axial à l'intérieur d'une douille de guidage (3) fixée dans le boîtier (1) de soupape,
un noyau magnétique (14) prévu dans le boîtier (1) de soupape et sur lequel s'appuie une extrémité du ressort de rappel (16) non tournée vers le module,
une entrée (13) de fluide sous pression qui débouche dans le boîtier de soupape et une sortie (19) de fluide sous pression,
le premier organe (7) de fermeture de soupape pouvant ouvrir ou fermer le premier passage (5) de soupape situé dans le deuxième organe (8) de fermeture de soupape en fonction de l'excitation électromagnétique d'une bobine (23) de soupape,
la section transversale du passage étant inférieure à celle du deuxième passage (6) de soupape qui s'ouvre sous l'action d'un ressort (17), ce passage étant prévu dans un corps (27) de siège de soupape,
un élément d'accouplement (28) configuré essentiellement en forme de chapeau, placé sur un appendice (31) de l'induit magnétique et dans lequel le premier organe (7) de fermeture de soupape est logé à déplacement relatif par rapport à l'induit magnétique (15),
**caractérisée en ce que**
l'élément d'accouplement (28) est partiellement en contact avec la paroi intérieure de la douille de guidage (3).

2. Soupape électromagnétique selon la revendication 1, **caractérisée en ce que** l'élément d'accouplement (28) présente plusieurs saillies radiales (24) réparties régulièrement sur sa surface d'enveloppe et en contact de glissement avec la paroi intérieure de la douille de guidage (3).

3. Soupape électromagnétique selon la revendication 2, **caractérisée en ce que** les saillies radiales (24) s'étendent sous la forme de nervures orientées axialement et parallèlement à l'induit magnétique (15) sur toute la hauteur de la paroi de l'élément d'accouplement (28) en forme de chapeau et **en ce qu'**un espace intermédiaire (32) qui permet le passage du fluide sous pression est prévu entre les saillies (24) et la partie de paroi de l'appendice (31) de l'induit magnétique recouverte par l'élément d'accouplement (28).

4. Soupape électromagnétique selon la revendication 3, **caractérisée en ce que** l'espace intermédiaire (32) est raccordé hydrauliquement à plusieurs ouvertures (33) d'équilibrage de pression prévues au fond de l'élément d'accouplement (28) réalisé en forme de chapeau ainsi que sur le bord supérieur du chapeau de l'élément d'accouplement (28).

5. Soupape électromagnétique selon la revendication 4, **caractérisée en ce que** les ouvertures (33) d'équilibrage de pression prévues au fond de l'élément (28) d'accouplement en forme de chapeau sont réparties en étoile autour d'une ouverture centrale (34) ménagée dans la surface frontale du fond pour reprendre le premier organe (7) de fermeture de soupape.

6. Soupape électromagnétique selon la revendication 2, **caractérisée en ce que** la surface d'enveloppe de l'élément d'accouplement (28) située entre les saillies (24) est maintenue sur l'appendice (31) de l'induit magnétique par une adaptation serrée.

7. Soupape électromagnétique selon la revendication 6, **caractérisée en ce que** la surface d'enveloppe de l'élément d'accouplement (28) située entre les saillies (24) est bloquée en correspondance géométrique dans une rainure (36) prévue dans l'appendice (31) de l'induit magnétique, au moyen d'une déformation radiale partielle de la surface d'enveloppe (35) sur le bord supérieur du chapeau de l'élément d'accouplement (28).

8. Soupape électromagnétique selon la revendication 6, **caractérisée en ce que** seule la surface d'enveloppe (35) qui s'étend entre les saillies (24) de l'élément d'accouplement (28) est évasée sous précontrainte radiale pendant qu'elle est repoussée sur l'appendice (31) de l'induit magnétique.

9. Soupape électromagnétique selon la revendication 6, **caractérisée en ce que** le bord supérieur du chapeau de l'élément d'accouplement (28) présente pour sa rigidification un collet (37) orienté radialement vers l'extérieur, grâce à quoi après le sertissage sous pression de l'élément d'accouplement (28) sur l'appendice (31) de l'induit magnétique, un retrait élastique radial de la partie de paroi est obtenu en direction de l'appendice (31) de l'induit magnétique.

10. Soupape électromagnétique selon la revendication 2, **caractérisée en ce que** plusieurs creux (38) qui sont adaptés pour loger et guider en translation les saillies (24) qui présentent la forme de rainures longitudinales ménagées sur le contour extérieur des saillies (24) sont prévues à la périphérie de la paroi intérieure de la douille de guidage (3).
